# EUROPÄISCHE PATENTSCHRIFT

(11) **EP 1 570 939 B1**
(45) Veröffentlichungstag und Bekanntmachung des Hinweises auf die Patenterteilung: **29.08.2007**
(21) Anmeldenummer: 05003869.4
(22) Anmeldetag: 23.02.2005
(51) Int. Cl.: B23K 9/18

(54) **Unterpulver-Schweissverfahren**
Submerged arc welding process
Soudage à l'arc submergé

(30) Priorität: 02.03.2004 DE 102004010085
(43) Veröffentlichungstag der Anmeldung: 07.09.2005
(73) Patentinhaber: Howaldtswerke-Deutsche Werft GmbH, 24143 Kiel (DE)
(72) Erfinder: Hinneberg, Dieter, Dr.-Ing., 24568 Kaltenkirchen (DE); Eisenstein, Bernd, 24109 Kiel (DE); Panoch, Axel, Dipl.-Ing., 24250 Nettelsee (DE)
(74) Vertreter: Vollmann, Heiko

(56) Entgegenhaltungen:
- FR-A- 2 229 494
- FR-A- 2 396 616
- US-A- 2 669 640

## Beschreibung

Die Erfindung betrifft ein Unterpulver-Schweißverfahren mit den im Oberbegriff des Anspruchs 1 angegebenen Merkmalen sowie eine Elektrodenanordnung zum Ausführen dieses Verfahrens, welche der FR-A-2 229 494 zu entnehmen sind.

Das Unterpulver-Schweißen ist ein Fügeverfahren bei dem eine Drahtelektrode kontinuierlich in einem Lichtbogen unter einer Schicht Schweißpulver abgeschmolzen wird. Dabei brennt der Lichtbogen zwischen der Elektrode und dem Werkstück in einer gasgefüllten Schweißkaverne, die durch Metalldämpfe und verdampfte Pulverbestandteile gebildet wird. Begrenzt wird die Kaverne durch eine Hülle aus geschmolzenem Schweißpulver und dem Werkstück bzw. Schmelzbad.

Zu den Vorteilen des Unterpulver-Schweißens zählt der verhältnismäßig hohe thermische Wirkungsgrad des sehr stabilen Schweißprozesses, der daraus resultiert, dass die Schweißkaverne die Abstrahlverluste des Lichtbogens verringert. Ferner tritt nahezu keine Spritzerbildung auf. Auch entstehen kaum Schweißrauche und die Strahlungsbelastung für den Schweißer und die Geräuschentwicklung sind sehr niedrig. Aufgrund der hohen Schweißgeschwindigkeiten liegt das Hauptanwendungsgebiet des Unterpulver-Schweißens im Schweißen langer, gerader Nähte.

Um die Leistungsfähigkeit des Verfahrens zu steigern, ist es bekannt, mehrere Drahtelektroden gleichzeitig zu verwenden, wie es beim UP-Doppeldraht- und UP-Mehrdrahtschweißen der Fall ist. FR 2 410 529 A1 beschreibt beispielsweise ein Unterpulver-Schweißverfahren, bei dem vier abschmelzende Drahtelektroden in einem gemeinsamen Schmelzbad brennen.

Es sind auch andere Kombinationen des Unterpulver-Schweißens mit anderen Schweißverfahren zur Leistungssteigerung bzw. zur Nutzung der Verfahrensvorteile des Unterpulver-Schweißens bekannt.

So sind Kombinationen des Unterpulver-Schweißverfahrens mit dem Schutzgasschweißen oder mit dem Laserschweißen bekannt. Bei diesen Verfahrenskombinationen werden die jeweils beteiligten Verfahren jedoch soweit voneinander beabstandet ausgeführt, dass sie getrennte Schmelzbäder bilden. So handelt es sich bei diesen Verfahrenskombinationen im eigentlichen Sinne um keine kombinierten Schweißverfahren, sondern lediglich um zwei nacheinander ablaufende Verfahren, die getrennte Schweißlagen erzeugen. Des Weiteren ist es bei diesen Verfahrenskombinationen immer erforderlich, dass das Unterpulver-Schweißen wegen der Pulveraufschüttung als zweites Verfahren abläuft.

Daneben ist aus DD 236 470 A1 ein Unterpulver-Schweißverfahren mit einer nicht abschmelzenden Elektrode zur Herstellung dünner, tief eingebrannter Nähte bekannt. Die Schweißleistung dieses Verfahrens ist begrenzt. Zum Schweißen beispielsweise von Y-Nähten ist es aufgrund des fehlenden Zusatzwerkstoffes ungeeignet.

Die Aufgabe dieser Erfindung ist es, das Unterpulver-Schweißverfahren so zu modifizieren, dass der Energieeintrag und die Einbrandtiefe erhöht werden und die Schweißleistung, insbesondere die Schweißgeschwindigkeit, verbessert werden.

Diese Aufgabe wird erfindungsgemäß durch ein Unterpulver-Schweißverfahren mit den im Anspruch 1 angegebenen Merkmalen gelöst. Bevorzugte Ausführungsformen ergeben sich aus den unteransprüchen, der nachfolgenden Beschreibung und der Zeichnung.

Das erfindungsgemäße Unterpulver-Schweißverfahren weist mindestens eine in einem Lichtbogen unter einer Schicht Schweißpulver abschmelzende Schweißelektrode und einen zweiten Lichtbogen zwischen einer nicht abschmelzenden Elektrode und dem Werkstück auf, wobei beide Lichtbögen in einem gemeinsamen Schmelzbad brennen. Dabei wird die abschmelzende Elektrode mit Wechselstrom beaufschlagt.

Die abschmelzende Elektrode wird, wie beim Unterpulver-Schweißen üblich, von einer Drahtelektrode gebildet. Diese kann sowohl als endlicher Schweißdraht ausgebildet sein als auch in Form eines quasi endlosen Drahtes der Schweißstelle zugeführt werden. Bei der nicht abschmelzenden Elektrode handelt es sich vorteilhaft um eine Wolfram-Elektrode. Die beiden Elektroden werden so nah zueinander positioniert, dass deren Lichtbögen in einer gemeinsamen Schmelze brennen, so dass es sich bei diesem Verfahren um ein echtes Hybridverfahren handelt. Während die abschmelzende Drahtelektrode den Zusatzwerkstoff zum Auffüllen der Schweißfuge liefert, bringt die nicht abschmelzende Elektrode zusätzliche Energie in die Schmelze bzw. das Werkstück ein und beeinflusst die geometrische Ausbildung der Schmelze und erhöht insbesondere die Einbrandtiefe. Die abschmelzende Elektrode wird dabei mit Wechselstrom beaufschlagt, um die so genannte "Blaswirkung" zu vermeiden, die wegen des geringen Abstandes zwischen der abschmelzenden Elektrode und der nicht abschmelzenden Elektrode zu einer gegenseitigen Beeinflussung deren Lichtbögen führt.

Zweckmäßigerweise brennen der Lichtbogen der abschmelzenden Elektrode und der Lichtbogen der nicht abschmelzenden Elektrode in einer gemeinsamen Kaverne, die sich unter dem Schweißpulver bildet. Wie beim reinen Unterpulver-Schweißen schützt die Kaverne die Schweißstelle vor der Atmosphäre. Diese Aufgabe wird bei Uchtbogenschweißverfahren mit einer nicht abschmelzenden Elektrode, wie zum Beispiel dem WIG-Schweißen oder dem Plasma-Schweißen, durch einen Schutzgasstrom übernommen. Dabei wird das Schutzgas über eine äußere Ringdüse des Schweißbrenners der Schweißstelle zugeführt. Bei dem erfindungsgemäßen Verfahren ist eine Schutzgaszufuhr nicht erforderlich, da die Schweißstelle durch die durch das Schweißpulver gebildete Gasbeladung der Kaverne vor der Atmosphäre geschützt wird.

In einer bevorzugten Verfahrensvariante wird der Lichtbogen der abschmelzenden Elektrode in Schweißrichtung vor dem Lichtbogen der nicht abschmelzenden Elektrode geführt. Dabei sticht der Lichtbogen der nicht abschmelzenden Elektrode in das Schmelzbad, welches zuvor von dem Lichtbogen der abschmelzenden Elektrode erzeugt wurde. Hierdurch wird die Schmelze weiter aufgeheizt. Bei hoher Energiedichte kann der Lichtbogen der nicht abschmelzenden Elektrode die Einbrandtiefe erhöhen. Des Weiteren wirkt die kinetische Energie des Lichtbogens der nicht abschmelzenden Elektrode einbrandfördernd auf die Schmelze, indem der Lichtbogen einen Druck auf das Schmelzbad ausübt. Dies lässt sich leistungssteigernd in eine höhere Schweißgeschwindigkeit umwandeln bzw. sind beim Verschweißen großer Blechquerschnitte nicht mehrere Schweißlagen erforderlich.

Es kann aber auch vorteilhaft sein, wenn der Lichtbogen der nicht abschmelzenden Elektrode in Schweißrichtung vor dem Lichtbogen der abschmelzenden Elektrode geführt wird. In diesem Fall werden die zu schweißenden Werkstücke durch den Lichtbogen der nicht abschmelzenden Elektrode aufgeschmolzen. Danach wird der Werkstoff durch den Lichtbogen der abschmelzenden Elektrode weiter aufgeschmolzen und die Naht fertig geschweißt.

Ein mögliches Einsatzgebiet dieser Elektrodenanordnung ist das Verschweißen von Blechen, die zum Verschleiß- und/oder Korrosionsschutz mit hochfesten Materialien beschichtet sind. Zum Teil weisen diese Werkstoffe eine hohe Schmelztemperatur auf wie z.B. Kobalt-Basislegierungen, so genannte Stellite. Diese Stellite können in einem Plasma-Lichtbogen erschmolzen werden, bevor der nachfolgende Lichtbogen einer abschmelzenden Elektrode das Werkstück weiter aufschmilzt und die Schweißung abschließt.

In einer erfindungsgemäßen Verfahrensvariante wird der Schweißstelle ein separater Schweißzusatzwerkstoff zugeführt. Dies kann erforderlich sein, wenn das aufgeschmolzene Material der abschmelzenden Elektrode nicht ausreicht, die zu verschweißende Fügestelle zweier Werkstücke aufzufüllen, beispielsweise beim Verschweißen zweier Bleche, die im Y- oder V-Stoß angeordnet sind. Eine weitere Möglichkeit ist es, der Schmelze über eine separate Zufuhr zusätzliche Legierungselemente zukommen zu lassen.

Bevorzugt wird der zweite Lichtbogen durch einen Plasmaschneidbrenner gebildet. Dessen Plasma-Lichtbogen wird durch eine wassergekühlte Brennerdüse derart eingeschnürt, dass eine nahezu zylindrische Lichtbogenentladung mit hoher Leistungsdichte entsteht. Je nach Prozessführung dringt der Plasma-Lichtbogen tief in die Schmelze des Unterpulver-Schmelzbades oder in den noch nicht aufgeschmolzenen Grundwerkstoff ein. Dabei ermöglicht die Energiedichte des fokussierten Plasma-Lichtbogens selbst im I-Stoß einen tiefen Einbrand und hohe Schweißgeschwindigkeiten.

Die Schweißparameter des Plasma-Schneidbrenners werden vorteilhaft so eingestellt, dass sie eine Durchschmelzung des Werkstücks verhindern. So sollte die Aufschmelztiefe geringer als die zu schweißende Blechdicke sein. Einstellbare Parameter sind beispielsweise die Stromstärke und damit die Brennerleistung, die Schweißgeschwindigkeit sowie der Gasdruck des Plasmagases. Auch die Wahl eines geeigneten Plasmagases ist für das Schweißergebnis bedeutsam, da dessen Wärmeleitfähigkeit die Übertragung der hohen Temperaturen des Plasmastrahls auf das Werkstück bestimmt und das Atom- bzw. Molekulargewicht die Impulsdichte des Plassmastrahls stark beeinflusst. So ist das einzusetzende Plasmagas in Abhängigkeit von der Schweißaufgabe auszuwählen, wobei als Gase alle inerten Gase, Kohlendioxid, Wasserstoff und Stickstoff sowie alle Mischungen dieser Gase eingesetzt werden können.

Für das erfindungsgemäße Unterpulver-Schweißverfahren ist eine Elektrodenanordnung vorgesehen, die neben mindestens einer abschmelzenden Elektrode eine weitere nicht abschmelzende Elektrode aufweist, wobei die abschmelzende Elektrode und die nicht abschmelzende Elektrode so voneinander beabstandet sind, dass Ihre Lichtbögen in einem gemeinsamen Schmelzbad münden, um vorzugsweise eine gemeinsame Schweißkaverne zu bilden. Entsprechend sind die Köpfe der Schweißbrenner, in denen die beiden Elektroden geführt werden, zu dimensionieren. Die abschmelzende Elektrode ist bei dieser Elektrodenanordnung mit Wechselstrom beaufschlagt.

Vorteilhaft bildet die nicht abschmelzende Elektrode einen Teil des Kopfes eines Plasma-Schneidbtenners. Im Gegensatz zu konventionellen Plasma-Schweißbrennern, die zum Schutz des Lichtbogens und der Schweißstelle eine äußere Schutzgasdüse aufweisen, besteht der Kopf eines Plasma-Schneidbrenners im Allgemeinen nur aus einer Elektrodenhalterung mit einer nicht abschmelzenden Elektrode und einer diese Elektrode umhüllenden wassergekühlten Düse, die mit der Elektrode einen Ringspalt bildet, durch den das Plasmagas zugeführt wird. Dabei hat sich ein Düsendurchmesser von 4 bis 6 mm als besonders vorteilhaft erwiesen. Dementsprechend ist der Kopf eines Plasma-Schneidbrenners schlanker als der Kopf eines Plasma-Schweißbrenners ausgebildet. Der geringere Kopfdurchmesser des Plasma-Schneidbrenners ermöglicht es, den Brennerkopf so nah an den Kopf des Brenners mit der abschmelzenden Elektrode heranzuführen, dass die Lichtbögen der beiden Elektroden in einem gemeinsamen Schmelzbad brennen.

Eine bevorzugte Ausführungsform weist eine Elektrodenanordnung auf, in der die nicht abschmelzende Elektrode in Schweißrichtung hinter der abschmelzenden Elektrode angeordnet ist. In diesem Fall wird, der Schweißbrenner mit der nicht abschmelzenden Elektrode, zum Beispiel ein Plasma-Schneidbrenner, hinter dem Schweißbrenner mit der abschmelzenden Elektrode, bei dem es sich beispielsweise um einen konventionellen Unterpulver-Schweißbrenner handelt, angeordnet. Wie beim Unterpulver-Schweißen üblich, ist vor dem Unterpulver-Schweißbrenner eine Pulverzufuhr vorgesehen, um die Schweißstelle mit Schweißpulver abzudecken.

Es kann aber auch vorteilhaft sein, die Elektroden so anzuordnen, dass sich die nicht abschmelzende Elektrode vor der abschmelzenden Elektrode befindet. In diesem Fall ist beispielsweise ein Plasma-Schneidbrenner in Schweißrichtung vor einer bekannten Unterpulver-Schweißanordnung, bestehend aus einer Pulverzufuhr und einem Unterpulver-Schweißbrenner, so angeordnet, dass sein Lichtbogen in das aufgeschüttete Schweißpulver vorzugsweise vollständig eintaucht.

Die Erfindung ist nachfolgend anhand von in der Zeichnung dargestellten Ausführungsbeispielen näher erläutert. Es zeigen:
- Fig. 1:: eine Prinzipskizze des erfindungsgemäßen UnterpulverSchweißverfahrens und der hierfür vorgesehenen Elektrodenanordnung, in der die nicht abschmelzende Elektrode in Schweißrichtung hinter der abschmelzenden Elektrode geführt wird und
- Fig. 2:: eine Prinzipskizze des erfindungsgemäßen UnterpulverSchweißverfahrens und der hierfür vorgesehenen Elektrodenanordnung, in der die nicht abschmelzende Elektrode in Schweißrichtung vor der abschmelzenden Elektrode geführt wird.

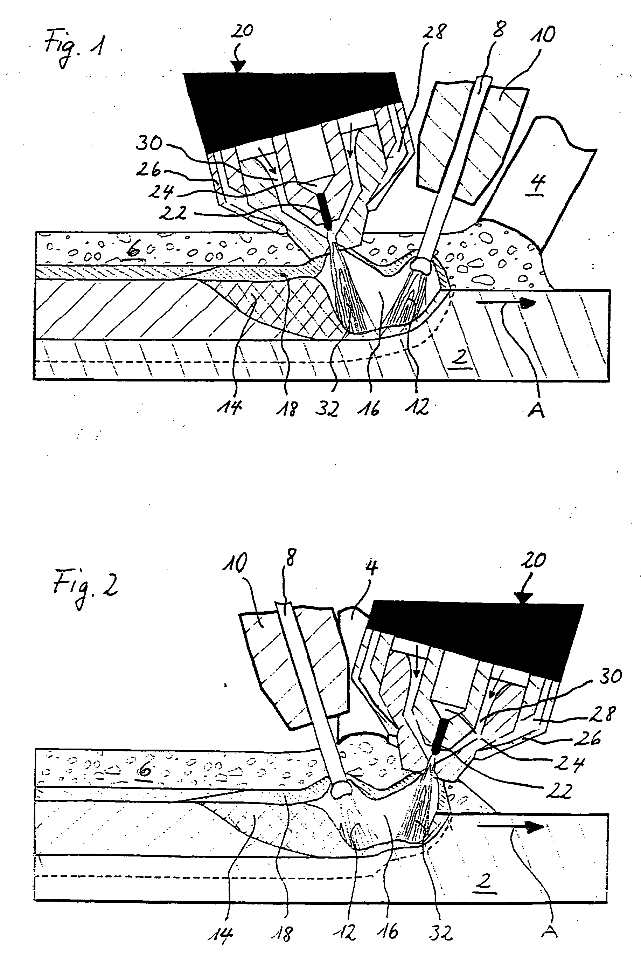

Fig. 1 zeigt ein Werkstück 2, auf das durch eine Pulverzufuhr 4 ein Schweißpulver 6 aufgebracht wird. Die Pulverzufuhr ist wie bei Unterpulver-Schweißanlagen üblich ausgebildet und wie auch die übrige Unterpulver-Schweißanlage hier nicht beschrieben. Die Aufschüttung des Schweißpulvers 6 wird hinter der Pulverzufuhr 4 durch eine abschmelzende Elektrode 8 eines Unterpulver-Schweißbrenners 10 durchstoßen. Zwischen der Elektrode 8 und dem Werkstück 2 ist ein Lichtbogen 12 ausgebildet, der ein Schmelzbad 14 bildet. Verdampfte Bestandteile des Schweißpulvers 6 und Metalldämpfe des Schmelzbades 14 bilden eine Kaverne 16 zwischen dem Werkstück 2 und dem aufgeschütteten Schweißpulver 6. Diese Kaverne 16 wird werkstückseitig durch den aufgeschmolzenen Grundwerkstoff begrenzt und pulverseitig durch eine Schicht flüssiger Schlacke 18, die aus aufgeschmolzenen Pulverbestandteilen besteht, abgeschlossen.

Hinter der Pulverzufuhr 4 und dem Unterpulver-Schweißbrenner 10 wird ein Plasma-Schneidbrenner 20 geführt. Dieser weist eine nicht abschmelzende Wolfram-Elektrode 22 auf. Die nicht abschmelzende Elektrode 22 ist in einer Elektrodenhalterung 24 angeordnet. Diese Elektrodenhalterung 24 und die Elektrode 22 werden von einer Düse 26 umhüllt, die eine Wasserkühlung 28 aufweist. Zusammen mit der Elektrodenhalterung 24 sowie der nicht abschmelzenden Elektrode 22 bildet die Düse 26 einen Ringspaltkanal 30, durch den ein Plasmagas an die Elektrode 22 und die Austrittsöffnung der Düse 26 geführt wird.

Als Plasmagase sind aktive oder inerte Gase einsetzbar, wobei sich Kohlendioxid und Argon mit einem Zusatz von 5% H₂ als besonders vorteilhaft erwiesen haben. Der Gasdruck wird bevorzugt in einem Bereich zwischen 2,5 bis 3,5 bar variiert.

Die Austrittsöffnung der Düse 26 des Plasma-Scheidbrenners 20 taucht in das aufgeschüttete Schweißpulver 6 ein. Es wird ein Lichtbogen 32 zwischen der nicht abschmelzenden Elektrode 22 und dem Werkstück 2 gezündet. Dabei taucht der Lichtbogen 32 in das durch den Lichtbogen 12 gebildete Schmelzbad 14 ein und erhöht dessen Tiefeneinbrand.

Fig. 2 zeigt eine Verfahrensvariante des Unterpulver-Schweißverfahrens, in der der oben beschriebene Plasma-Schneidbrenner 20 mit der nicht abschmelzenden Elektrode 22 in Schweißrichtung A vor dem Unterpulver-Schweißbrenner 10 mit der abschmelzenden Elektrode 8 geführt wird. Hier schmilzt der Lichtbogen 32 des Plasma-Schneidbrenners 20 den unter einer Schicht Schweißpulver 6 befindlichen Grundwerkstoff des Werkstücks 2 auf. Das Schweißpulver 6 wird der Schweißstelle über die Pulverzufuhr 4 zugeführt, die in Fig. 2 hinter dem Plasma-Schneidbrenner 20 angeordnet ist.

Die Pulverzufuhr 4 kann auch neben oder vor dem Plasma-Schneidbrenner 20 angeordnet sein, sollte aber stets so angeordnet sein, dass sichergestellt ist, dass der Lichtbogen 32 des Plasma-Schneidbrenners 20 unter dem Schweißpulver 6 brennt.

Aufgrund verdampfender Bestandteile des Schweißpulvers 6 sowie von Metalldämpfen des Schmelzbades 14 bildet sich erneut eine Kaverne 16, die oberhalb der Schmelze durch eine Schicht flüssiger Schlacke 18 abgeschlossen wird. In diese Kaverne 16 stößt die abschmelzende Elektrode 8 des Unterpulver-Schweißbrenners 10 und zündet den Lichtbogen 12, der den Grundwerkstoff des Werkstücks 2 weiter aufschmilzt und der Schweißung durch das Abschmelzen der Elektrode 8 den nötigen Zusatzwerkstoff liefert.

### Bezugszeichenliste

- 2: Werkstück
- 4: Pulverzufuhr
- 6: Schweißpulver
- 8: abschmelzende Elektrode
- 10: Unterpulver-Schweißbrenner
- 12: Lichtbogen
- 14: Schmelzbad
- 16: Kaverne
- 18: flüssige Schlacke
- 20: Plasma-Schneidbrenner
- 22: nicht abschmelzende Elektrode
- 24: Elektrodenhalterung
- 26: Düse
- 28: Wasserkühlung
- 30: Ringspaltkanal
- 32: Lichtbogen

- A: Schweißrichtung

## Patentansprüche

1. Unterpulver-Schweißverfahren mit mindestens einer unter einer Schicht Schweißpulver (6) in einem Lichtbogen (12) abschmelzenden Schweißelektrode (8), wobei ein zweiter Lichtbogen (32) zwischen einer nicht abschmelzenden Elektrode (22) und dem Werkstück (2) erzeugt wird, und **dadurch gekennzeichnet, dass** dieser Lichtbogen (32) zusammen mit dem Lichtbogen (12) der abschmelzenden Elektrode (8) in einem gemeinsamen Schmelzbad (14) brennt, wobei die die abschmelzende Elektrode (8) mit Wechselstrom beaufschlagt wird.

2. Unterpulver-Schweißverfahren nach Anspruch 1, **dadurch gekennzeichnet, dass** der Lichtbogen (12) der abschmelzenden Elektrode (8) und der Lichtbogen (32) der nicht abschmelzenden Elektrode (22) in einer gemeinsamen sich unter dem Schweißpulver (6) bildenden Kaverne (16) brennen.

3. Unterpulver-Schweißverfahren nach einem der vorangehenden Ansprüche, **dadurch gekennzeichnet, dass** der Lichtbogen (12) der abschmelzenden Elektrode (8) in Schweißrichtung (A) vor dem Lichtbogen (32) der nicht abschmelzenden Elektrode (22) geführt wird.

4. Unterpulver-Schweißverfahren nach einem der vorangehenden Ansprüche, **dadurch gekennzeichnet, dass** der Lichtbogen (32) der nicht abschmelzenden Elektrode (22) in Schweißrichtung (A) vor dem Lichtbogen (12) der abschmelzenden Elektrode (8) genführt wird.

5. Unterpulver-Schweißverfahren nach einem der vorangehenden Ansprüche, **dadurch gekennzeichnet, dass** eine separate Zufuhr eines Schweißzusatzwerkstoffs vorgesehen ist.

6. Unterpulver-Schweißverfahren nach einem der vorangehenden Ansprüche, **dadurch gekennzeichnet, dass** der zweite Lichtbogen (32) durch einen Plasma-Schneidbrenner (20) gebildet wird.

7. Unterpulver-Schweißverfahren nach Anspruch 6, **dadurch gekennzeichnet, dass** eine Schweißparametereinstellung des Plasma-Schneidbrenners (20) vorgesehen ist, die ein Durchschneiden des Werkstücks (2) verhindert.

8. Elektrodenanordnung für ein Unterpulverschweißverfahren zur Ausführung eines Schweißverfahrens nach einem der vorangehenden Ansprüche mit einer Pulverzufuhr (4), wobei neben mindestens einer abschmelzenden Elektrode (8) eine weitere nicht abschmelzende Elektrode (22) vorgesehen ist, **dadurch gekennzeichnet, dass** die abschmelzende Elektrode (8) und die nicht abschmelzende Elektrode (22) so voneinander beabstandet sind, dass ihre Lichtbögen (12, 32) in einem gemeinsamen Schmelzbad (14) münden, und die abschmelzende Elektrode (8) mit Wechselstrom beaufschlagt ist.

9. Elektrodenanordnung für ein Unterpulver-Schweißverfahren nach Anspruch 8, **dadurch gekennzeichnet, dass** die abschmelzende Elektrode (8) und die nicht abschmelzende Elektrode (22) so voneinander beabstandet sind, dass sie eine gemeinsame Schweißkaverne (16) erzeugen.

10. Elektrodenanordnung für ein Unterpulver-Schweißverfahren nach einem der vorangehenden Ansprüche ab Anspruch 8, **dadurch gekennzeichnet, dass** die nicht abschmelzende Elektrode (22) einen Teil des Kopfes eines Plasma-Schneidbrenners (20) bildet.

11. Elektrodenanordnung für ein Unterpulver-Schweißverfahren nach einem der vorangehenden Ansprüche ab Anspruch 8, **dadurch gekennzeichnet, dass** die nicht abschmelzende Elektrode (22) in Schweißrichtung (A) hinter der abschmelzenden Elektrode (8) angeordnet ist.

12. Elektrodenanordnung für ein Unterpulver-Schweißverfahren nach einem der vorangehenden Ansprüche ab Anspruch 8, **dadurch gekennzeichnet, dass** die nicht abschmelzende Elektrode (22) in Schweißrichtung (A) vor der abschmelzenden Elektrode (8) angeordnet ist.

## Claims

1. A submerged arc welding method with at least one welding electrode (8) which fuses off below a layer of welding powder (6) in an arc (12), wherein a second arc (32) is produced between a non-fusing electrode (22) and the subject (2), **characterised in that** this arc (32) together with the arc (12) of the fusing-off electrode (8) burns in a common pool (14), wherein the fusing-off electrode (8) is subjected to alternating current.

2. A submerged arc welding method according to claim 1, **characterised in that** the arc (12) of the fusing-off electrode (8), and the arc (32) of the non-fusing electrode (22), burn in a common cavity (16) forming beneath the welding powder (6).

3. A submerged arc welding method according to one of the preceding claims, **characterised in that** the arc (12) of the fusing-off electrode (8) is led in the welding direction (A) in front of the arc (32) of the non-fusing electrode (22).

4. A submerged arc welding method according to one of the preceding claims, **characterised in that** the arc (32) of the non-fusing electrode (22) is led in the welding direction (A) in front of the arc (12) of the fusing-off electrode (8).

5. A submerged arc welding method according to one of the preceding claims, **characterised in that** a separate supply of a welding additional material is provided.

6. A submerged arc welding method according to one of the preceding claims, **characterised in that** the second arc (32) is formed by a plasma cutting torch (20).

7. A submerged arc welding method according to claim 6, **characterised in that** a welding parameter setting of the plasma cutting torch (20) is provided, which prevents the subject (2) from being cut through.

8. An electrode arrangement for a submerged arc welding method for carrying out a welding method according to one of the preceding claims, with a powder feed (4), wherein apart from at least one fusing-off electrode (8), a further non-fusing electrode (22) is provided, **characterised in that** the fusing-off electrode (8) and the non-fusing electrode (22) are distanced to one another such that their arcs (12, 32) run out in a common pool (14), and the fusing-off electrode (8) is subjected to alternating current.

9. An electrode arrangement for submerged arc welding method according to claim 8, **characterised in that** the fusing-off electrode (8) and the non-fusing electrode (22) are distanced to one another such that they produce a common welding cavity (16).

10. An electrode arrangement for a submerged arc welding method according to one of the proceeding claims, from claim 8, **characterised in that** the non-fusing electrode (22) forms a part of a head of a plasma cutting torch (20).

11. An electrode arrangement for a submerged arc welding method according to one of the preceding claims, from claim 8, **characterised in that** the non-fusing electrode (22) is arranged in the welding direction (A) behind the fusing-off electrode (8).

12. An electrode arrangement for a submerged arc welding method according to one of the preceding claims, from claim 8, **characterised in that** non-fusing electrode (22) is arranged in the welding direction (A) in front of the fusing-off electrode (8).

## Revendications

1. Procédé de soudage à l'arc submergé avec au moins une électrode de soudage (8) consommable dans un arc (12) sous une couche de flux en poudre (6), un deuxième arc (32) étant généré entre une électrode (22) non consommable et la pièce à usiner (2), et **caractérisé en ce que** cet arc (32) brûle en même temps que l'arc (12) de l'électrode (8) consommable dans un bain de fusion (14) commun, l'électrode (8) consommable étant alimentée par un courant alternatif.

2. Procédé de soudage à l'arc submergé selon la revendication 1, **caractérisé en ce que** l'arc (12) de l'électrode (8) consommable et l'arc (32) de l'électrode (22) non consommable brûlent dans une cavité (16) commune se formant sous le flux en poudre (6).

3. Procédé de soudage à l'arc submergé selon l'une des revendications précédentes, **caractérisé en ce que** l'arc (12) de l'électrode (8) consommable est guidé dans la direction de soudage (A) en amont de l'arc (32) de l'électrode (22) non consommable.

4. Procédé de soudage à l'arc submergé selon l'une des revendications précédentes, **caractérisé en ce que** l'arc (32) de l'électrode (22) non consommable est guidé dans la direction de soudage (A) en amont de l'arc (12) de l'électrode (8) consommable.

5. Procédé de soudage à l'arc submergé selon l'une des revendications précédentes, **caractérisé en ce qu'**il est prévu une introduction séparée d'un matériau d'apport.

6. Procédé de soudage à l'arc submergé selon l'une des revendications précédentes, **caractérisé en ce que** le deuxième arc (32) est formé par une torche (20) de coupage à jet de plasma.

7. Procédé de soudage à l'arc submergé selon la revendication 6, **caractérisé en ce qu'**il est prévu un réglage des paramètres de soudage de la torche (20) de coupage à jet de plasma, lequel réglage empêche un découpage de la pièce à usiner (2).

8. Agencement d'électrodes pour un procédé de soudage à l'arc submergé pour la mise en oeuvre d'un procédé de soudage selon l'une des revendications précédentes, avec une introduction (4) de flux en poudre, où il est prévu, outre au moins une électrode (8) consommable, une autre électrode (22) non consommable, **caractérisé en ce que** l'électrode (8) consommable et l'électrode (22) non consommable sont disposées à distance l'une de l'autre de telle sorte que leurs arcs (12, 32) débouchent dans un bain de fusion (14) commun, et **en ce que** l'électrode (8) consommable est alimentée par un courant alternatif.

9. Agencement d'électrodes pour un procédé de soudage à l'arc submergé selon la revendication 8, **caractérisé en ce que** l'électrode (8) consommable et l'électrode (22) non consommable sont disposées à distance l'une de l'autre de façon à générer une cavité de soudage (16) commune.

10. Agencement d'électrodes pour un procédé de soudage à l'arc submergé selon l'une des revendications précédentes à partir de la revendication 8, **caractérisé en ce que** l'électrode (22) non consommable forme une partie de la tête d'une torche (20) de coupage à jet de plasma.

11. Agencement d'électrodes pour un procédé de soudage à l'arc submergé selon l'une des revendications précédentes à partir de la revendication 8, **caractérisé en ce que** l'électrode (22) non consommable est disposée dans le sens de soudage (A) derrière l'électrode (8) consommable.

12. Agencement d'électrodes pour un procédé de soudage à l'arc submergé selon l'une des revendications précédentes à partir de la revendication 8, **caractérisé en ce que** l'électrode (22) non consommable est disposée dans la direction de soudage (A), en amont de l'électrode (8) consommable.
